# EUROPÄISCHE PATENTSCHRIFT

(11) **EP 3 146 235 B1**
(45) Veröffentlichungstag und Bekanntmachung des Hinweises auf die Patenterteilung: **26.08.2020**
(21) Anmeldenummer: 15729329.1
(22) Anmeldetag: 23.04.2015
(51) Int. Cl.: F16F 15/14

(54) **SCHWUNGRAD MIT FLIEHKRAFTPENDEL**
FLYWHEEL WITH CENTRIFUGAL FORCE PENDULUM
VOLANT MUNI D'UN PENDULE CENTRIFUGE

(30) Priorität: 20.05.2014 DE 102014209511
(43) Veröffentlichungstag der Anmeldung: 29.03.2017
(73) Patentinhaber: Schaeffler Technologies AG & Co. KG, 91074 Herzogenaurach (DE)
(72) Erfinder: STRASSER, Pascal, F-67250 Aschbach (FR)
(86) Internationale Anmeldenummer: PCT/DE2015/200275
(87) Internationale Veröffentlichungsnummer: WO 2015/176720

(56) Entgegenhaltungen:
- WO-A1-2014/029397
- DE-A1-102009 042 825
- DE-A1-102010 049 556
- DE-A1-102012 219 798
- DE-B4- 10 066 436
- FR-A- 1 054 604
- FR-A1- 3 008 151
- US-A- 2 079 226

## Beschreibung

Die Erfindung betrifft ein Schwungrad zur Befestigung an einer Kurbelwelle eines Verbrennungsmotors mit einem um eine Drehachse verdrehbaren Scheibenteil mit einem dem Verbrennungsmotor zugewandten Fliehkraftpendel mit gegenüber dem Scheibenteil im Fliehkraftfeld des um die Drehachse drehenden Scheibenteils pendelnd angeordneten, über den Umfang verteilten Pendelmassen, wobei zwischen ersten Laufbahnen des Scheibenteils und zweiten Laufbahnen der Pendelmassen Rollen angeordnet sind.

Schwungräder in Form von Einmassenschwungrädern und geteilten Schwungrädern wie Zweimassenschwungrädern sind zur Beruhigung der drehschwingungsbehafteten Kurbelwelle eines Verbrennungsmotors seit langem bekannt. Hierbei ist gewünscht, bei gleichbleibender oder verbesserter Drehschwingungsisolation die Masse zu verringern. Hierzu werden - wie beispielsweise aus der DE 10 2011 108 486 A1 bekannt - zusätzlich Fliehkraftpendel eingesetzt, die als drehzahladaptive Drehschwingungstilger wirksam sind. Die Fliehkraftpendel werden bevorzugt ausgangsseitig an geteilten Schwungrädern eingesetzt. Aus der nicht vorveröffentlichten deutschen Patentanmeldung Nr. 10 2013 221 609.2 ist zudem eine Anwendung von Fliehkraftpendeln an der Eingangsseite und an der Ausgangsseite eines geteilten Schwungrads bekannt. Die hieraus bekannten Fliehkraftpendel weisen jeweils ein radial ausgerichtetes Flanschteil auf, an dem Pendelmassen im Fliehkraftfeld des drehenden Schwungrads pendelnd aufgehängt sind. Hierzu sind in einem radial ausgerichteten Flanschteil und in den Pendelmassen Ausschnitte vorgesehen, auf dessen Wandungen Laufbahnen eingerichtet sind, auf denen die Ausschnitte durchgreifende Rollen abwälzen. Die Krümmung der Laufbahnen ist dabei so ausgebildet, dass eine pendelnde Aufhängung der Pendelmassen entsprechend einem monofilaren oder bifilaren oder in Freiform schwingenden Fadenpendel vorgegeben ist.

DE 10 2010 049556 A1 und FR 1 054 604 A offenbaren jeweils beide eine Fliehkraftpendeleinrichtung, wobei Pendelmassen mittels Rollen zwischen einerseits radial an der Außenseite der Pendelmassen angeordneten Laufbahnen und anderseits an einem Innenumfang eines ringförmigen Bauteils angeordneten Laufbahnen pendeln.

Aufgabe der Erfindung ist die Weiterbildung eines Schwungrads mit einem Fliehkraftpendel mit einer verringerten Masse der Pendelmasse und damit verringerter Flächenpressung bei gleicher oder verbesserter Drehschwingungsisolation.

Die Aufgabe wird durch den Gegenstand des Anspruchs 1 gelöst. Die von diesem abhängigen Ansprüche geben vorteilhafte Ausführungsformen des Gegenstands des Anspruchs 1 wieder.

Das vorgeschlagene Schwungrad ist insbesondere an einer Kurbelwelle eines Verbrennungsmotors befestigt und kann als Einmassenschwungrad beispielsweise als Gegendruckplatte einer Reibungskupplung mit einer Reibfläche oder als geteiltes Schwungrad mit einer ein Fliehkraftpendel enthaltenden Primärschwungmasse und einer gegenüber dieser entgegen der Wirkung einer Federeinrichtung um die Drehachse begrenzt verdrehbar angeordneten Sekundärschwungmasse ausgebildet sein.

Das Schwungrad kann ein beispielsweise aus Blech gestanztes und umgeformtes, um eine Drehachse verdrehbares Scheibenteil enthalten, an der dem Verbrennungsmotor zugewandten Stirnseite ein Fliehkraftpendel angeordnet ist, beispielsweise in eine Einformung des Scheibenteils im Wesentlichen plan eingebracht ist. Gegenüber dem Scheibenteil sind im Fliehkraftfeld des um die Drehachse drehenden Scheibenteils über den Umfang verteilte Pendelmassen pendelnd angeordnet. Die Pendelbewegung wird durch erste und zweite Laufbahnen erzielt, zwischen denen Wälzkörper wie Rollen abwälzen. Die ersten und zweiten Laufbahnen sind zueinander komplementär in der Art ausgebildet, dass eine Pendelbewegung um einen gedachten Pendelpunkt möglich ist. Hierbei stützen sich die Pendelmassen über die Rollen, und die Laufbahnen unter Bildung einer Flächenpressung gegen die Fliehkraft ab. Durch die ermöglichte Pendelbewegung der Pendelmassen wird während Drehmomentschwankungen der Kurbelwelle und damit des Schwungrads abhängig von auftretenden Drehmomentspitzen Energie in den Pendelmassen zwischengespeichert und verzögert wieder abgegeben, so dass eine drehzahladaptive Drehschwingungstilgung erzielt wird. Je nach Schwingungsgrad wird entsprechend der Pendelschwingungsgleichungen die Masse der Pendelmassen, die Pendelbewegung entsprechend einer Fadenlänge in den Laufbahnen, deren Schwingwinkel und dergleichen eingestellt. Die Ausbildung der Form der Laufbahnen kann einer monofilaren, bifilaren, beispielsweise parallelen oder trapezförmigen Fadenanordnung eines Fadenpendels entsprechen.

Das vorgeschlagene Schwungrad ist mit einem Fliehkraftpendel versehen, welches ohne ein radial ausgerichtetes Flanschteil auskommt. Zur radialen Abstützung der Pendelmassen gegenüber dem Schwungrad beziehungsweise eines Scheibenteils des Schwungrads weisen das Schwungrad oder Scheibenteil an deren Außenumfang einen ringförmigen Ansatz auf, an dessen Innenumfang die ersten Laufbahnen vorgesehen sind. An den Pendelmassen sind radial außen die zweiten Laufbahnen angeordnet. Zwischen den Laufbahnen wälzen Wälzkörper wie Rollen ab, wobei sich im Fliehkraftfeld abhängig von der komplementären Ausbildung der ersten und zweiten Laufbahnen eine entsprechende Pendelbewegung der Pendelmassen ergibt. Bevorzugt sind in Umfangsrichtung beabstandet pro Pendelmasse zwei erste und zweite Laufbahnen und zwei Rollen vorgesehen. Durch die direkte Abstützung der Pendelmasse an dem Innenumfang über die ersten und zweiten Laufbahnen und die Rollen können die Pendelmassen möglichst weit nach radial außen verlagert werden, so dass deren Massen bei denselben Tilgungseigenschaften kleiner ausgebildet werden können. Hierdurch erniedrigt sich die Stabilität des Fliehkraftpendels und erniedrigt sich die Flächenpressung an den Laufbahnen und Rollen, so dass ein robustes Fliehkraftpendel vorgeschlagen werden kann. Die Rollen sind dabei kippsicher entsprechend der notwendigen Schwenkbewegung bei Pendelbewegungen der Pendelmasse gegenüber dem Schwungrad beziehungsweise Scheibenteil geführt. Hierzu können in dem Schwungrad oder Scheibenteil entsprechend bogenförmige Führungen für die Rollen vorgesehen sein. Beispielsweise können die Rollen an ihren Stirnseiten beidseitig Zapfen aufweisen, die in entsprechend bogenförmig ausgebildeten Längsschlitzen oder Langlöchern geführt sind.

In einer vorteilhaften Ausführungsform sind die Pendelmassen zwischen zwei axial beabstandeten, beispielsweise ringförmigen, aus Blech gestanzten und umgeformten Seitenteilen aufgenommen, die die entsprechenden Langlöcher für die Zapfen der Rollen aufweisen. Die Seitenteile sind radial innerhalb der Pendelmassen an dem Schwungrad beziehungsweise dessen Scheibenteil befestigt, beispielsweise vernietet. Um die statisch über der Drehachse angeordneten Pendelmassen bei nicht ausreichender Fliehkraft beispielsweise bei stehendem oder langsam drehendem Schwungrad im Wesentlichen in ihrer radialen Position nahe der ersten Laufbahnen zu halten und damit beispielsweise eine Geräuschbildung der sich radial verlagernden Pendelmassen bei fallenden und steigenden Drehzahlen zu verhindern, weisen die Seitenteile radial innerhalb der Pendelmassen Abstützbereiche mit Radialspiel bei drehendem Schwungrad gegenüber den Pendelmassen auf. Die Abstützbereiche können durch Ein- beziehungsweise Ausformungen, Durchstellungen und dergleichen aus den Seitenteilen gebildet sein. Die Seitenteile samt dem Fliehkraftpendel sind in bevorzugter Weise in einer Einformung des Scheibenteils untergebracht, so dass das Scheibenteil mit den Seitenteilen und dem Fliehkraftpendel in Richtung des Verbrennungsmotors eine im Wesentlichen plane oder an die Kontur des Gehäuses des Verbrennungsmotors angepasste Form aufweist.

Durch die verlagerbare Aufnahme der Rollen in den Seitenteilen beispielsweise mittels Zapfen und Langlöchern können diese zugleich axial in den Seitenteilen geführt sein. Hierzu können die Wandungen der Langlöcher nach innen in Richtung Rollen umgelegt sein und in die Zapfen umgebende Ringnuten axial eingreifen, so dass ein Verkippen der Rollen ausgeschlossen ist. Alternativ können die Rollen axial in den ersten Laufbahnen geführt sein. Hierzu kann jeweils in den ersten Laufbahnen ein radial nach innen erweiterter, in eine Ringnut der Rollen eingreifender Ringbord vorgesehen sein. In diesem Fall können die Langlöcher ohne Umlegen der Ränder und die Rollen ohne die Zapfen umgebende Ringnut ausgebildet sein. Um die Gefahr eines Verkantens der Rollen an den Seitenteilen auszuschließen, können die Stirnseiten der Rollen ballig ausgebildet sein.

Die ersten Laufbahnen können direkt in den Innenumfang eingebracht, beispielsweise eingeprägt, eingeformt oder eingefräst und anschließend gehärtet sein. Es hat sich jedoch als vorteilhaft erwiesen, die ersten Laufbahnen als Einlegeteile wie Einsätze mit dem Scheibenteil zu verbinden. Beispielsweise kann ein endlos gefertigtes oder aus Bandmaterial hergestelltes, rund gebogenes und bevorzugt endseitig geschlossenes wie beispielsweise verschweißtes und oder verrastetes Ringteil vorgesehen sein. Alternativ können mehrere Ringabschnitte, beispielsweise jeweils erste Laufbahnen für eine Pendelmasse enthaltende Ringsegmente als Einsätze vorgesehen sein. Ein als Ringteil ausgebildeter Einsatz kann mit dem Innenumfang mittels eines Presssitzes beispielsweise durch Schrumpfen verbunden sein. Alternativ können Ringteile mit dem Scheibenteil vernietet sein. Die Ringsegmente sind bevorzugt mit dem Scheibenteil vernietet, können aber auch verrastet oder in anderer Weise mit dem Scheibenteil verbunden sein.

Die Erfindung wird anhand des in den Figuren 1 bis 3 dargestellten Ausführungsbeispiels näher erläutert. Dabei zeigen:
- Figur 1: den oberen Teil eines um eine Drehachse verdrehbaren Schwungrads mit einem Fliehkraftpendel im Längsschnitt,
- Figur 2: ein gegenüber dem Schwungrad der Figur 1 abgeändertes Schwungrad in derselben Darstellung
und
- Figur 3: ein gegenüber den Schwungrädern der Figuren 1 und 2 abgeändertes Schwungrad in derselben Darstellung.

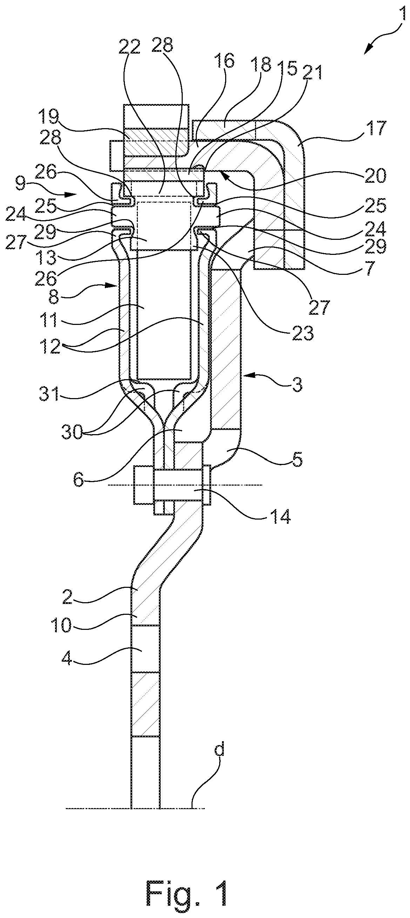

Die Figur 1 zeigt den oberen Teil des um die Drehachse d angeordneten Schwungrads 1 im Schnitt. Das Schwungrad 1 enthält das aus Blech hergestellte Scheibenteil 2. Das dargestellte Ausführungsbeispiel ist als Einmassenschwungrad ausgebildet und bildet eine Gegendruckplatte mit der Reibfläche einer Reibungskupplung. In weiteren Ausführungsformen kann das Scheibenteil 2 in veränderter Form eine Primärschwungscheibe eines geteilten Schwungrads bilden, wobei an dem Scheibenteil 2 Lagermittel, beispielsweise ein Lagerdom zur begrenzt verdrehbaren Aufnahme einer Sekundärschwungmasse und Mittel zur Aufnahme und Beaufschlagung einer in Umfangsrichtung zwischen Scheibenteil 2 und der Sekundärschwungmasse wirksamen Federeinrichtung vorgesehen sind.

Das Scheibenteil 2 ist mittels der Befestigungsöffnungen 4 mit einer nicht dargestellten Kurbelwelle eines Verbrennungsmotors verbunden. Radial außerhalb der Befestigungsöffnungen 4 weist das Scheibenteil 2 die Einformung 6 mit die Reibfläche 3 radial umgebenden Durchbrüchen 5, 7 auf, in der das Fliehkraftpendel 8 untergebracht ist, so dass das Schwungrad 1 an der dem nicht dargestellten Gehäuses des Verbrennungsmotors zugewandten Stirnseite 9 im Wesentlichen plan ausgebildet ist. Hierunter ist insbesondere zu verstehen, dass das Scheibenteil 2 und das Fliehkraftpendel 8 radial außerhalb der Befestigungsöffnungen 4 einen verringerten, im Wesentlichen planen Abstand zu dem Gehäuse des Verbrennungsmotors aufweisen, und den die Befestigungsöffnungen 4 enthaltenden Scheibenbereich 10 des Scheibenteils axial in Richtung Gehäuse des Verbrennungsmotors übergreifen.

Das Fliehkraftpendel 8 ist aus den Pendelmassen 11, den Seitenteilen 12, den Rollen 13 und dem Einsatz 15 gebildet. Die Seitenteile 12 sind radial innerhalb der Pendelmassen 11 mittels der Niete 14 mit dem Scheibenteil 2 verbunden und ringförmig ausgebildet. Axial zwischen den Seitenteilen 12 sind die Pendelmassen 11 aufgenommen. Das Scheibenteil 2 weist an seinem Außenumfang den axial erweiterten Ansatz 16 auf, an dem die Zusatzmasse 17 mit den Drehwinkelmarkierungen 18 und der Anlasserzahnkranz 19 aufgenommen sind. An dem Innenumfang 20 ist der Einsatz 15 aufgenommen, hier aufgeschrumpft und an dem Anschlag 21 angelegt. An dem Einsatz 15 sind über den Umfang verteilt die ersten Laufbahnen 22 angeordnet. Die Pendelmassen 11 weisen radial außen zu den ersten Laufbahnen 22 komplementäre zweite Laufbahnen 23 auf. Zwischen den Laufbahnen 22, 23 wälzen die Rollen 13 ab. Unter Fliehkrafteinfluss werden die zweiten Laufbahnen 23 der Pendelmassen 11 gegen die Rollen 13 und ersten Laufbahnen 22 gepresst. Pro Pendelmasse 11 sind bevorzugt zwei erste und zweite Laufbahnen 22, 23 und Rollen 13 vorgesehen. Über den Umfang sind zwei bis sechs bevorzugt vier Pendelmassen vorgesehen.

Die Rollen 13 weisen an ihren Stirnseiten jeweils einen Zapfen 24 auf, der axial in die nach außen bogenförmig ausgebildeten Langlöcher 25 eingreift. Die Langlöcher 25 weisen entlang ihrer Länge radial innen und radial außen Umformungen 26, 27 auf, die in die Zapfen 24 umgebende Ringnuten 28, 29 der Rollen 13 eingreifen und dadurch die Rollen 13 axial und kippfest führen.

Radial innerhalb der Pendelmassen 11 weisen die Seitenteile 12 die Abstützbereiche 30 auf, die aus den Seitenteilen 12 ausgestellt sind. Hierdurch wird bei stehendem oder langsam drehendem Schwungrad 1 ein Herabfallen der über der Drehachse d angeordneten Pendelmassen vermieden. Im dargestellten Zustand bei schnell drehendem Schwungrad 1 werden die Pendelmassen 11 radial nach außen beschleunigt und es stellt sich der Radialspalt 31 zwischen den Pendelmassen 11 und den Abstützbereichen 30 über den gesamten Verdrehwinkel der Pendelmassen 11 gegenüber den Seitenteilen 12 ein.

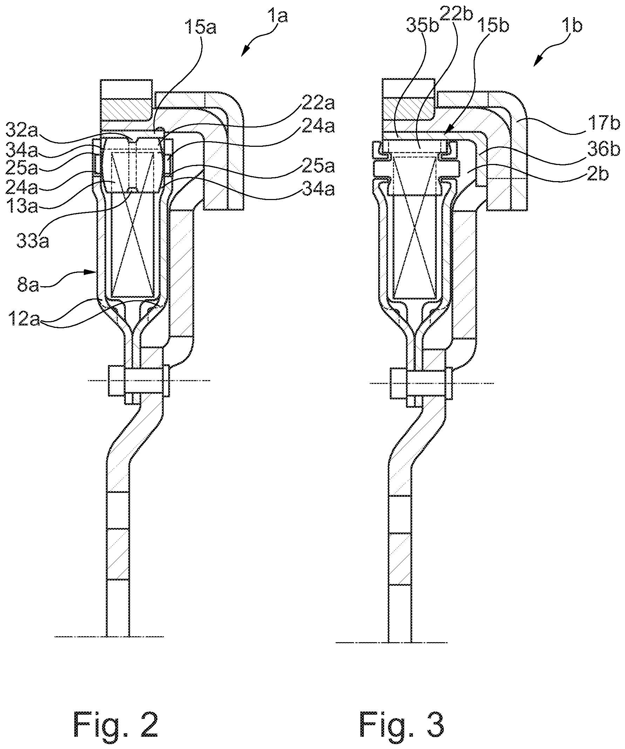

Die Figur 2 zeigt das dem Schwungrad 1 der Figur 1 ähnliche Schwungrad 1a in derselben Darstellung. Im Unterschied zu diesem erfolgt die axiale Führung der Rollen 13a des Fliehkraftpendels 8a in dem Einsatz 15a. Hierzu weisen die ersten Laufbahnen 22a des Einsatzes 15a entlang ihrer Erstreckung in Umfangsrichtung den Bord 32a auf, der als Ringbord über den gesamten ringförmigen Einsatz 15a erstreckt sein kann. Die Rollen 13a weisen mittig zu dem Bord 32a komplementäre Ringnuten 33a auf. Die Stirnseiten 34a der Rollen 13a mit den Zapfen 24a sind ballig ausgebildet, um beispielsweise Verkantungen und Reibflächen gegenüber den Seitenteilen 12a zu minimieren. Die Seitenteile 12a sind ohne Umformungen an den Langlöchern 25a ausgebildet.

Die Figur 3 zeigt eine Variante des Schwungrads 1 der Figur 1 in Form eines in derselben Darstellung gezeigten Schwungrads 1b. Im Unterschied zu dem Schwungrad 1 weist das Schwungrad 1b den im Querschnitt L-förmigen Einsatz 15b mit den Schenkeln 35b, 36b auf, der mit dem Scheibenteil 2b vernietet ist. Hierzu sind an dem Schenkel 35b die ersten Laufbahnen 22b angeordnet und der Schenkel 36b ist mit dem Scheibenteil 2b, bevorzugt zusammen mit der Zusatzmasse 17b mittels nicht dargestellter Niete vernietet.

### Bezugszeichenliste

- 1: Schwungrad
- 1a: Schwungrad
- 1b: Schwungrad
- 2: Scheibenteil
- 2b: Scheibenteil
- 3: Reibfläche
- 4: Befestigungsöffnung
- 5: Durchbruch
- 6: Einformung
- 7: Durchbruch
- 8: Fliehkraftpendel
- 8a: Fliehkraftpendel
- 9: Stirnseite
- 10: Scheibenbereich
- 11: Pendelmasse
- 12: Seitenteil
- 12a: Seitenteil
- 13: Rolle
- 13a: Rolle
- 14: Niet
- 15: Einsatz
- 15a: Einsatz
- 15b: Einsatz
- 16: axialer Ansatz
- 17: Zusatzmasse
- 17b: Zusatzmasse
- 18: Drehwinkelmarkierung
- 19: Anlasserzahnkranz
- 20: Innenumfang
- 21: Anschlag
- 22: Laufbahn
- 22a: Laufbahn
- 22b: Laufbahn
- 23: Laufbahn
- 24: Zapfen
- 24a: Zapfen
- 25: Langloch
- 25a: Langloch
- 26: Umformung
- 27: Umformung
- 28: Ringnut
- 29: Ringnut
- 30: Abstützbereich
- 31: Radialspalt
- 32a: Bord
- 33a: Ringnut
- 34a: Stirnseite
- 35b: Schenkel
- 36b: Schenkel
- d: Drehachse

## Patentansprüche

1. Schwungrad (1, 1a, 1b) zur Befestigung an einer Kurbelwelle eines Verbrennungsmotors mit einem um eine Drehachse (d) verdrehbaren Scheibenteil (2, 2b) mit einem dem Verbrennungsmotor zugewandten Fliehkraftpendel (8, 8a) mit gegenüber dem Scheibenteil (2, 2b) im Fliehkraftfeld des um die Drehachse (d) drehenden Scheibenteils pendelnd angeordneten, über den Umfang verteilten Pendelmassen (11), wobei zwischen ersten Laufbahnen (22, 22a, 22b) des Scheibenteils (2, 2b) und zweiten Laufbahnen (23) der Pendelmassen (11) Rollen (13, 13a) angeordnet sind, **dadurch gekennzeichnet, dass** das Scheibenteil (2, 2b) an seinem Außenumfang einen ringförmigen Ansatz (16) aufweist, an dessen Innenumfang (20) die ersten Laufbahnen (22, 22a, 22b) und radial außen an den Pendelmassen (11) die zweiten Laufbahnen (23) angeordnet sind, wobei zwischen den Laufbahnen (22, 22a, 22b, 23) die Rollen (13, 13a) entsprechend der Pendelbewegung der Pendelmassen (11) begrenzt gegenüber dem Scheibenteil (2, 2b) verlagerbar vorgesehen sind.

2. Schwungrad (1, 1a, 1b) nach Anspruch 1, **dadurch gekennzeichnet, dass** die Pendelmassen (11) zwischen zwei radial innerhalb der Pendelmassen (11) an dem Scheibenteil (2, 2b) befestigten, die Rollen (13, 13a) begrenzt verschwenkbar aufnehmenden Seitenteilen (12, 12a) aufgenommen sind.

3. Schwungrad (1, 1a, 1b) nach Anspruch 2, **dadurch gekennzeichnet, dass** die Seitenteile (12, 12a) radial innerhalb der Pendelmassen (11) bei drehendem Schwungrad mit Radialspalt (31) gegenüber den Pendelmassen (11) versehene Abstützbereiche (30) für die Pendelmassen (11) aufweisen.

4. Schwungrad (1, 1b) nach einem der Ansprüche 2 oder 3, **dadurch gekennzeichnet, dass** die Rollen (13) axial in den Seitenteilen (12) geführt sind.

5. Schwungrad (1a) nach einem der Ansprüche 1 bis 3, **dadurch gekennzeichnet, dass** die Rollen (13a) axial in den ersten Laufbahnen (22a) geführt sind.

6. Schwungrad (1a) nach Anspruch 5, **dadurch gekennzeichnet, dass** in den ersten Laufbahnen (22a) ein radial nach innen erweiterter, in eine Ringnut (33a) der Rollen (13a) eingreifender Bord (32a) vorgesehen ist.

7. Schwungrad (1a) nach einem der Ansprüche 1 bis 6, **dadurch gekennzeichnet, dass** die Stirnseiten (34a) der Rollen (13a) ballig ausgebildet sind.

8. Schwungrad (1, 1a, 1b) nach einem der Ansprüche 1 bis 7, **dadurch gekennzeichnet, dass** in dem Innenumfang (20) zumindest ein Einsatz (15, 15a, 15b) mit den ersten Laufbahnen (22, 22a, 22b) eingebracht ist.

9. Schwungrad (1, 1a, 1b) nach einem der Ansprüche 1 bis 8, **dadurch gekennzeichnet, dass** das Schwungrad als Einmassenschwungrad mit einer Reibfläche (3) für eine Reibungskupplung ausgebildet ist.

10. Schwungrad nach einem der Ansprüche 1 bis 8, **dadurch gekennzeichnet, dass** das Schwungrad als geteiltes Schwungrad mit einer das Fliehkraftpendel enthaltenden Primärschwungmasse und einer gegenüber dieser entgegen der Wirkung einer Federeinrichtung um die Drehachse begrenzt verdrehbar angeordneten Sekundärschwungmasse ausgebildet ist.

## Claims

1. A flywheel (1, 1a, 1b) for securing to a crankshaft of an internal combustion engine, comprising a disk part (2, 2b) which can be rotated about a rotational axis (d) and which comprises a centrifugal pendulum (8, 8a) that faces the internal combustion engine, said centrifugal pendulum comprising pendulum masses (11) which are arranged in an oscillating manner with respect to the disk part (2, 2b) in the centrifugal field of the disk part that rotates about the rotational axis (d) and which are distributed over the circumference, wherein rollers (13, 13a) are arranged between first tracks (22, 22a, 22b) of the disk part (2, 2b) and second tracks (23) of the pendulum masses (11), **characterised in that** to allow the formation of pendulum masses with less mass and less surface pressure, the disk part (2, 2b) has an annular protrusion (16) on the outer circumference thereof, the first tracks (22, 22a, 22b) being arranged on the inner circumference (20) thereof and the second tracks (23) being arranged radially outwards on the pendulum masses (11), wherein the rollers (13, 13a) are provided between the tracks (22, 22a, 22b, 23) in a movable manner to a limited degree with respect to the disk part (2, 2b) so as to correspond to the pendulum movement of the pendulum masses (11).

2. The flywheel (1, 1a, 1b) according to claim 1, **characterised in that** the pendulum masses (11) are received between two side parts (12, 12a), radially inside the pendulum masses (11), secured to the disk part (2, 2b), pivotably accommodated to a limited degree by the rollers (13, 13a).

3. The flywheel (1, 1a, 1b) according to claim 2, **characterised in that** the side parts (12, 12a) have support areas (30) for the pendulum masses (11) provided radially inside the pendulum masses (11) when the flywheel is rotating with a radial gap (31) with respect to the pendulum masses (11).

4. The flywheel (1, 1b) according to any one of claims 2 or 3, **characterised in that** the rollers (13) are guided axially in the side parts (12).

5. The flywheel (1a) according to any one of claims 1 to 3, **characterised in that** the rollers (13a) are guided axially in the first tracks (22a).

6. The flywheel (1a) according to claim 5, **characterised in that** in the first tracks (22a) a rim (32a) is provided which extends radially inwards and engages in an annular groove (33a) of the rollers (13a).

7. The flywheel (1a) according to any one of claims 1 to 6, **characterised in that** the end faces (34a) of the rollers (13a) are spherical.

8. The flywheel (1, 1a, 1b) according to any one of claims 1 to 7, **characterised in that** at least one insert (15, 15a, 15b) with the first tracks (22, 22a, 22b) is introduced into the inner circumference (20).

9. The flywheel (1, 1a, 1b) according to any one of claims 1 to 8, **characterised in that** the flywheel is designed as a single-mass flywheel with a friction surface (3) for a friction clutch.

10. The flywheel according to any one of claims 1 to 8, **characterised in that** the flywheel is designed as a divided flywheel with a primary flywheel mass containing the centrifugal pendulum and a secondary flywheel mass arranged to rotate with respect to this to a limited extent against the action of a spring device about the rotational axis.

## Revendications

1. Volant (1, 1a, 1b) destiné à être fixé sur un vilebrequin d'un moteur à combustion interne comprenant une partie en forme de disque (2, 2b) apte à tourner autour d'un axe de rotation (d) et présentant un pendule centrifuge (8, 8a) qui fait face au moteur à combustion interne et qui présente des masses pendulaires (11) réparties sur la périphérie et disposées oscillantes par rapport à la partie en forme de disque (2, 2b) dans le champ centrifuge de la partie en forme de disque tournant autour de l'axe de rotation (d), des rouleaux (13, 13a) étant disposés entre des premiers chemins de roulement (22, 22a, 22b) de la partie en forme de disque (2, 2b) et des seconds chemins de roulement (23) des masses pendulaires (11), **caractérisé en ce que** la partie en forme de disque (2, 2b) présente sur sa périphérie externe un prolongement annulaire (16), sur la circonférence intérieure (20) duquel sont disposés les premiers chemins de roulement (22, 22a, 22b) et les seconds chemins de roulement (23) radialement à l'extérieur des masses pendulaires (11), les rouleaux (13, 13a) étant prévus pour être déplacés en fonction du déplacement pendulaire des masses pendulaires (11), de manière limitée par rapport à la partie en forme de disque (2, 2b) entre les chemins de roulement (22, 22a, 22b, 23).

2. Volant (1, 1a, 1b) selon la revendication 1, **caractérisé en ce que** les masses pendulaires (11) sont reçues entre deux parties latérales (12, 12a) fixées radialement à l'intérieur des masses pendulaires (11) sur la partie en forme de disque (2, 2b) recevant les rouleaux (13, 13a) dans une certaine mesure de manière pivotante.

3. Volant (1, 1a, 1b) selon la revendication 2, **caractérisé en ce que** les parties latérales (12, 12a) présentent radialement à l'intérieur des masses pendulaires (11) lorsque le volant tourne avec un jeu radial (31) par rapport aux masses pendulaires (11) des zones d'appui (30) prévues pour les masses pendulaires (11).

4. Volant (1, 1b) selon l'une des revendications 2 ou 3, **caractérisé en ce que** les rouleaux (13) sont guidés axialement dans les parties latérales (12).

5. Volant (1a) selon l'une des revendications 1 à 3, **caractérisé en ce que** les rouleaux (13a) sont guidés axialement dans les premiers chemins de roulement (22a).

6. Volant (1a) selon la revendication 5, **caractérisé en ce que** dans les premiers chemins de roulement (22a) est prévue une jante (32a) qui s'étend radialement vers l'intérieur et s'engage dans une rainure annulaire (33a) des rouleaux (13a).

7. Volant (1a) selon l'une des revendications 1 à 6, **caractérisé en ce que** les faces d'extrémité (34a) des rouleaux (13a) sont sphériques.

8. Volant (1, 1a, 1b) selon l'une des revendications 1 à 7, **caractérisé en ce qu'**au moins un insert (15, 15a, 15b) est ménagé dans la périphérie interne (20) avec les premiers chemins de roulement (22, 22a, 22b).

9. Volant (1, 1a, 1b) selon l'une des revendications 1 à 8, **caractérisé en ce que** le volant est conçu comme un volant à masse unique avec une surface de friction (3) pour un embrayage à friction.

10. Volant selon l'une des revendications 1 à 8, **caractérisé en ce que** le volant est conçu comme un volant divisé avec une masse de volant principale contenant le pendule centrifuge et une masse de volant secondaire qui est disposée de façon opposée afin de pouvoir tourner autour de l'axe de rotation dans une mesure limitée contre l'action d'un dispositif à ressort.
